# EUROPEAN PATENT APPLICATION

(11) **EP 1 528 461 A2**
(43) Date of publication of application: **04.05.2005**
(21) Application number: 04025447.6
(22) Date of filing: 26.10.2004
(51) Int. Cl.: G06F 3/14

(54) **Drawing apparatus and method of operating such an apparatus**

(30) Priority: 28.10.2003 JP 2003367754
(71) Applicant: Pioneer Corporation, Meguro-ku, Tokyo (JP)
(72) Inventor: Ishizu, Kazunori Pioneer Corporation, Kawagoe-shi Saitama (JP); Fujita, Hiroaki Pioneer Corporation, Kawagoe-shi Saitama (JP); Adachi, Hajime, Tsurugashima-shi Saitama (JP)
(74) Representative: Viering, Jentschura & Partner

(57) **Abstract**

A drawing apparatus (1) for displaying video images on a plurality of display devices (30) respectively, the apparatus is provided with: a video signal generating device (10) for generating a plurality of different video signals; and a signal transmitting device (15) for transmitting each of the plurality of different video signals to the plurality of display devices corresponding to each of the different video signals.

## Description

### BACKGROUND OF THE INVENTION

### 1. Field of the Invention

The present invention relates to a drawing apparatus for and a drawing method of displaying a video image on a plurality of display devices, and relates to a computer program product executable by the drawing apparatus and further relates to a drawing display system.

### 2. Description of the Related Art

Drawing apparatuses, such as GDCs (Graphic Display Controllers), capable of generating graphic images directly on hardware circuits, under control of CPUs or in CPU circuits and the like, are used as apparatuses necessary for displaying images on display devices. The drawing apparatuses allow hardware-level image processings, due to their extremely high level and high speed graphic processing performance. For instance, they are likely used in the case that the extremely high level graphic processings are demanded, such as generating high quality CGs (computer graphics) made of a plurality of polygons, or generating digital movies, and so on.

On the other hand, also in on-vehicle navigation apparatuses for example, the aforementioned drawing apparatuses are used for displaying menu, for displaying back ground screens, and so on, for example. Furthermore, recently, on-vehicle DVD reproduction apparatuses become more popular. For example, as seen in rear entertainment systems in which a front seat display device and a rear seat display device are mounted on a vehicle, systems including a plurality of display devices allowing viewing or enjoying video images displayed on each display device, are going to be common.

In order to display video images on each display device in the aforementioned rear entertainment system, the aforementioned drawing apparatuses are required for every display devices. Namely, if a plurality of drawing images is prepared for every display device, different video images can be displayed on each display device. In order to display the same video image on each device, however, every drawing apparatus are not necessarily required even in the case that a plurality of drawing apparatuses is prepared for each display device. In this case, the drawing performance cannot be utilized effectively. Additionally, preparing a plurality of drawing apparatuses involves the increase in the product weight, and the power consumption greater than necessary. Furthermore, the drawing apparatus is very expensive due to its high performance ability in graphic processings. Therefore, preparing a plurality of drawing apparatuses raises considerably the product cost. Still further, it is difficult to design software for parallel operations of a plurality of drawing devices. Thus, preparing a plurality of drawing apparatuses inherently has aforementioned demerits.

### SUMMARY OF THE INVENTION

It is therefore an object of the present invention to provide a drawing apparatus and a drawing method, as well as a computer program product and a drawing display system, to overcome the aforementioned various demerits.

The object can be achieved by the drawing apparatus of the present invention. The drawing apparatus is an apparatus for displaying video images on a plurality of display devices respectively. The drawing apparatus is constructed by a single hardware circuit or a single IC chip. A plurality of display devices is connected with the single drawing apparatus by means of wired or wireless communication. The drawing apparatus is provided with a video image generating device for generating a plurality of different video signals which is associated with the plurality of display devices respectively, and a signal transmitting device for transmitting the plurality of different video signals to the associated plurality of display devices respectively. For example, the drawing apparatus is embodied in a single IC chip in which the video image generating device and signal transmitting device are integrated. In this case, the single IC chip can generate a plurality of different video signals and transmit the plurality of different video signals to the plurality of display devices respectively.

Specifically, the video signal generating device in the single drawing apparatus generates a plurality of different video signals to be displayed on a plurality of display devices respectively. For example, if there are three display devices, two or three kinds of different video signals are generated. For example, if there are four display devices, two, three or four kinds of different video signals are generated. These video signals are associated with all or some of the display devices, respectively. These video signals are generated on the basis of an instruction transmitted from an external controlling device (e.g. a CPU) to the single drawing apparatus. In this drawing display system, however, if the number of display devices to be installed is known in advance, that number can be set in advance to generate the video signals corresponding to that number. In this case, it is not necessary to receive the instruction from the CPU. Incidentally, a plurality of video signals generated by the video image generating device may be analog video signals or may be digital video signals.

Then, the signal transmitting device transmits each of a plurality of different video signals generated by the video image generating device to the associated display devices. A way of transmitting different video signals by the signal transmitting device may be, for example, a way of transmitting in parallel to three display devices in the case that there are three display devices, or a way of transmitting a plurality of different video signals to one of three display devices and that one display device transmits the different video signals to other two display devices. In the latter case, when a plurality of different video signals is transmitted to one display device, an instruction signal to transmit the received video signals to other two display devices is transmitted with the video signals. A plurality of different video signals generated by the video signal generating device is associated with at least two of a plurality of display devices. In this case, the signal transmitting device transmits them to said at least two display devices. For example, if an instruction to transmit the different video signals to two display devices designated from among three display devices is inputted from the CPU, the different video signals generated by the video signal generating device are transmitted to the designated two display device, respectively. Thus, video images different from each other can be displayed on a plurality of display devices by a single drawing apparatus. Incidentally, the transmission from the signal transmitting device to a plurality of display devices may be performed via a wired transmission path, or may be performed via a wireless transmission path. Furthermore, the video signal may be continuously transmitted, or may be transmitted by a predetermined unit (e.g. by frame unit or by packet unit smaller than frame unit, as mentioned below).

Consequently, according to this embodiment, since different video signals can be displayed on a plurality of display devices by a single drawing apparatus, the drawing function is fully utilized, the circuit area, parts count and signal transmission path length is reduced, and thereby the product cost and the product weight are reduced. Additionally, there are advantages in that, comparing to the construction with a plurality of drawing apparatuses, the processings are facilitated, and the power consumption is reduced. Therefore, the drawing apparatus allowing an extremely low cost and an efficient operation, and furthermore paying attention to the earth environment from a viewpoint of energy efficiency is presented, while different video images are displayed on a plurality of display devices.

Next, an aspect of the drawing apparatus in the above embodiment is further provided with a division multiplexing device, for dividing a plurality of different video signals, which are generated by the video signal generating device, into predetermined units, and generating a single multiplexed signal by multiplexing the divided video signals. In this aspect, for example, it is embodied by disposing the division multiplexing device on the output line of a plurality of different video signals, which is generated by the video signal generating device, to the signal transmitting device. Incidentally, the video signal generating device may function also as the division multiplexing device.

According to this aspect, the drawing apparatus which may be embodied in a single IC chip or the like generates a plurality of different video signals, and displays different video images on a plurality of display devices.

Then, particularly in this aspect, a plurality of different video signals generated by the video signal generating device is divided into the predetermined units by the division multiplexing device. These video signals are preferably divided into predetermined time units for example on a transmission time axis of the video signal.

Then, a plurality of different video signals divided into predetermined units is multiplexed to generate a single multiplexed signal. Multiplexing a plurality of different video signals each divided into units may be performed collectively by a transmission unit having the same or almost same transmission time.

Then, the signal transmitting device transmits the single multiplexed video signal to a plurality of display devices. Furthermore, transmitting from the signal transmission device to the plurality of display devices may be performed via a wired transmission path, or may be performed via a wireless transmission path. Furthermore, the video signal may be continuously transmitted, or may be transmitted by a predetermined unit (e.g. by a frame unit, or packet unit smaller than the frame unit, as mentioned below).

Then, the display device displays the corresponding video signal from among the multiplexed different video signals. Therefore, a plurality of display devices extracts the video signal associated with that display device to display, and thereby a plurality of display devices can display different video images from each other.

Furthermore, in an aspect of the drawing apparatus in this embodiment, the identification signal is generated to identify a plurality of display devices from each other. In this case, for example, it may be embodied by providing an identification signal generating device for the drawing apparatus to generate the identification signal. Incidentally, the division multiplexing device may function also as the identification signal generating device. Then, the signal transmitting device transmits the single multiplexed signal made of different video signals to a plurality of display devices, with the identification signal being associated therewith. A plurality of display devices extracts the associated video signal, which is to be displayed by that device, with reference to the identification signals transmitted from the signal transmitting device. Then, a plurality of display devices displays the associated video signal respectively, resulting in different video images on a plurality of display devices.

Incidentally, at least one of a plurality of display devices is preferably provided with: an identification analyzing device for analyzing the identification signal; and a video signal selecting and outputting device for displaying and outputting the video signal to be displayed by the associated display device from among a plurality of divided video signals, on the basis of the analyzed identification signal.

By multiplexing a plurality of divided video signals and transmitting the multiplexed signal as a video output signal to a plurality of display devices, with the identification signal being added to the multiplexed signal, different video image can be displayed on a plurality of display devices.

Consequently, in an aspect of the aforementioned embodiment, even if a single drawing apparatus, which may be embodied in a single IC chip or the like, is used, different video images can be displayed on a plurality of display devices, due to multiplexing the video signals and adding the identification signal thereto.

Furthermore, in an aspect of the drawing apparatus in the aforementioned embodiment, the drawing apparatus has a working area for the video image generating device to generate the plurality of different video signals; and divides the working area into a plurality of record area portions to generate the plurality of different video signals. Then, the signal transmitting device transmits the different video signals generated in the record area portions to the plurality of display devices associated with the different video signals respectively. In this case, for example, each divided working area (each record area portions) corresponds to each display device one-to-one, by providing the divided working areas for each video signal to generate a plurality of video signals to be displayed on a plurality of display devices. Then, the signal transmitting device transmits the generated different video signals to the display devices corresponding to the respective divided working areas, and thereby different video images can be displayed on a plurality of display devices. In this way, the aforementioned division multiplexing device and the identification signal generating device are not essential, resulting in the simple construction of the drawing apparatus.

According to this aspect, it is possible to generate a plurality of different video signals in the drawing apparatus, which may be embodied in a single IC chip or the like, and different video images can be displayed on a plurality of display devices.

Particularly, the record area device used for the video signal generating device to generate a plurality of different video signals can be divided into a plurality of record area portions depending on generating the video signal. Dividing the record area device is performed by a working area dividing device.

More concretely, the working area dividing device divides the working area into the plurality of record area portions, depending on contents of video signals to be generated by the video signal generating device. Such dividing is preferably performed so that one record area portion is assigned to one video signal, for example. That is, in the case that two kinds of video signal are generated for example, the working area is preferably divided into two record area portions. For example in the case that four kinds of video signal are generated, the working area is preferably divided into four record area portions. Otherwise, in the case that one video signal is generated, the working area is not divided and may be used as one record area portion. Then, the video signal generating device generates one or more video signals in one or more record area portions.

Then, the signal transmitting device transmits each of a plurality of video signals generated as such to at least one of a plurality of display devices. In this case, the video signal generating device may take various constructions the same as aforementioned embodiments of the drawing apparatus.

Therefore, a plurality of different video signals is transmitted to each display device, and thereby different video images can be displayed on a plurality of display devices respectively.

Consequently, according to an aspect of the present embodiment, even if a single drawing apparatus, which may be embodied in a single IC chip or the like, is used, different video images can be displayed on a plurality of display devices respectively, by generating a plurality of video signals with using the divided record area.

Furthermore, the video signal generating device, the record area device, the record area division multiplexing device and the signal transmitting device are preferably embodied in a single IC chip or the like.

In another aspect of the present embodiment, there is further provided with a judging device for judging whether or not the same video image is to be displayed on a plurality of display devices. The signal generating device generates the same video signal, if the judging device judges that the same video image is to be displayed. The signal transmitting device transmits the same video signal to a plurality of display device.

According to this aspect, the same video image is relatively easily displayed without changing the construction of drawing apparatus, in a case that the same video image is displayed, instead of displaying different video images on a plurality of display devices.

That is, in the case that different video images are displayed on a plurality of display devices, it is performed by operations like as various aspects in the aforementioned embodiment. On the other hand, in the case that the same video image is displayed on a plurality of display devices, the video signal generating device generates sufficiently the same video signal. Then, the signal transmitting device transmits the same video signal to a plurality of display devices, and thereby the same video image can be displayed on a plurality of display devices.

In this case, the judging device may judges whether or not the same video signal is to be transmitted according to the instruction of the use of the drawing apparatus (e.g. an instruction from the external input as mentioned below).

Thereby, it is possible to switch display mode between the same video image and different video images for a plurality of display devices, without increasing the processing load of the drawing apparatus.

Incidentally, in this aspect, the video signal generating device may generate a plurality of same video images for each group of display devices. Alternatively, a common video signal may be generated and then it may be distributed by the signal transmitting device to each display device. For example, in the case that the same video image is displayed on two of three display devices and the different video image is displayed on the remaining one, a common video signal is generated for display devices for the same video image, and then the video signal is distributed to two display devices.

Next, an embodiment of the drawing method of the invention is a method of displaying different video images on a plurality of display devices respectively. Concretely, it is provided with a video signal generating process of generating a plurality of different video signals associated with the plurality of display devices. It is further provided with a signal transmitting process of transmitting a plurality of different video signals generated at the video signal generating process to the associated display devices respectively.

Therefore, according to the embodiment of the drawing method of the invention, a plurality of different video signal generated at the video signal generating process is transmitted to a plurality of display devices at the signal transmitting process. Operations in these process are achieved by operations the same as in the aforementioned embodiments according to the drawing apparatus of the present invention. Therefore, if the drawing method is achieved by the operation of a single IC chip or the like, the same advantages as the aforementioned embodiment according to the drawing apparatus of the invention can be obtained.

Incidentally, corresponding to various aspects of the aforementioned embodiment according to the drawing apparatus of the invention, the embodiment according to the drawing method of the invention may take various aspects. That is, for example, a division multiplexing process may be further included for dividing the video signal and multiplexing the divided video signal, or an identification signal generating process may be further included for generating an identification signal to identify a plurality of display devices, or a working area dividing process may be further included for dividing a record area to generate the video signal into a plurality of record area portions.

An embodiment of the computer program product of the present invention is for acting a computer as at least one of the signal generating device and the signal transmitting device of the drawing apparatus of the aforementioned embodiment.

According to an embodiment of the computer program product of the invention, the aforementioned embodiment of the drawing apparatus of the invention may be embodied relatively easily, by reading and running the computer program product from a record medium, such as a ROM, a CD-ROM, a DVD-ROM, a hard disk and so on, storing the computer program therein/thereon, or by downloading the computer program product to the computer via the communication device and running it. The computer loaded with the computer program product according to the present embodiment can realize the same operation as in the aforementioned embodiment according to the drawing apparatus of the invention.

That is, due to the operation of the computer acting as the signal generating device, it is possible to generate a plurality of different video signals associated with the plurality of display devices. Then, it is possible to transmit the plurality of different video signals to a plurality of display devices associated with each video signal. Therefore, various advantages of the embodiments according to the drawing apparatus of the invention can be obtained.

Incidentally, corresponding to various aspects of the embodiment according to the drawing apparatus of the invention, the embodiment according to the computer program product of the invention may take various aspects.

Next, an embodiment according to a drawing display system of the invention comprises: a plurality of display devices; and a drawing apparatus having a video image generating device and a signal transmitting device. The video signal generating device is for generating a plurality of video signals associated with the plurality of display devices, in the same manner as the video signal generating device of the embodiment according to the drawing apparatus of the invention. Furthermore, the signal transmitting device is for transmitting a plurality of different video signals to the plurality of display devices associated with these video signals, in the same manner as the signal transmitting device of the embodiment according to the drawing apparatus of the invention.

According to the embodiment of the drawing system of the invention, a plurality of video signals is generated by the video signal generating device, in the same manner as the embodiment according to the drawing apparatus of the invention. Then, a plurality of video signals generated as such is transmitted by the signal transmitting device to a plurality of display devices corresponding to these video signals. Then; each display device displays a video image on the basis of the transmitted video signal. Therefore, it is possible to realize the drawing displaying system capable of displaying different video images on a plurality of display devices.

Incidentally, corresponding to various aspects of the embodiment according to the drawing apparatus of the invention, the embodiment according to the drawing display system of the invention (i.e. the drawing apparatus in the drawing display system according to the embodiment) may take various aspects.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram illustrating a fundamental structure of the first embodiment of the drawing apparatus according to the present invention.
FIG. 2 is a block diagram illustrating another fundamental structure of the first embodiment of the drawing apparatus according to the present invention.
FIG. 3 is a flow chart illustrating an operational flow of the first embodiment of the drawing apparatus according to the present invention.
FIG. 4 is a schematic diagram conceptually illustrating a specific example of a plurality of video signals generated in the fist embodiment of the drawing apparatus according to the present invention.
FIG. 5 is an illustration showing a specific example of video images displayed on a plurality of displays, due to the operations in the first embodiment of the drawing apparatus according to the present invention.
FIG. 6 is a schematic diagram conceptually illustrating another specific example of a plurality of video signals generated in the fist embodiment of the drawing apparatus according to the present invention.
FIG. 7 is a block diagram conceptually illustrating a conventional drawing display system, for a comparison with the drawing display system according to the first embodiment of the present invention.
FIG. 8 is a block diagram conceptually illustrating another conventional drawing display system, for a comparison with the drawing display system according to the first embodiment of the present invention.
FIG. 9 is a schematic diagram conceptually illustrating video signals generated by a conventional drawing apparatus, for a comparison with video signals generated by the drawing apparatus according to the first embodiment of the present invention.
FIG. 10 is a block diagram conceptually illustrating a fundamental structure of a modification of the drawing apparatus according to the first embodiment of the present invention.
FIG. 11 is a block diagram illustrating a fundamental structure of the second embodiment of the drawing apparatus according to the present invention.
FIG. 12 is a schematic diagram conceptually illustrating a plurality of video signals generated in the second embodiment of the drawing apparatus according to the present invention.
FIG. 13 is a block diagram illustrating a fundamental structure of the third embodiment of the drawing apparatus according to the present invention.
FIG. 14 is a flow chart illustrating an operational flow of the third embodiment of the drawing apparatus according to the present invention.
FIG. 15 is a schematic diagram conceptually illustrating a specific example of dividing the memory, in the third embodiment of the drawing apparatus according to the present invention.

### DETAILED DESCRIPTION OF THE PREFERRED EMBODIMENTS

### (Embodiments)

With reference to drawings, the drawing apparatus and drawing method, as well as the computer program product, of the present invention will now be discussed along with its embodiments. Incidentally, the drawing apparatus in embodiments is embodied in a GDC (Graphic Display Controller), capable of generating graphic images directly on the hardware circuit, under control of the CPU, or in the CPU circuit, and the like. The explanation will be made on this drawing apparatus, as a specific example of the drawing apparatus capable of displaying different images on a plurality of display devices.

### (First Embodiment)

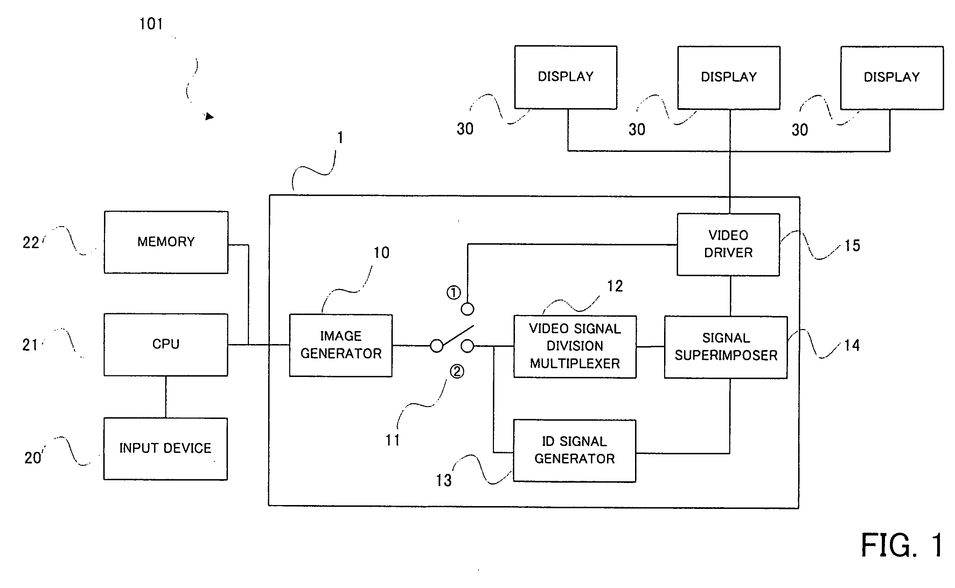

Firstly, the first embodiment of the drawing apparatus according to the present invention will be explained, with reference to FIG. 1 to FIG. 10.

### (Fundamental Structure of First Embodiment)

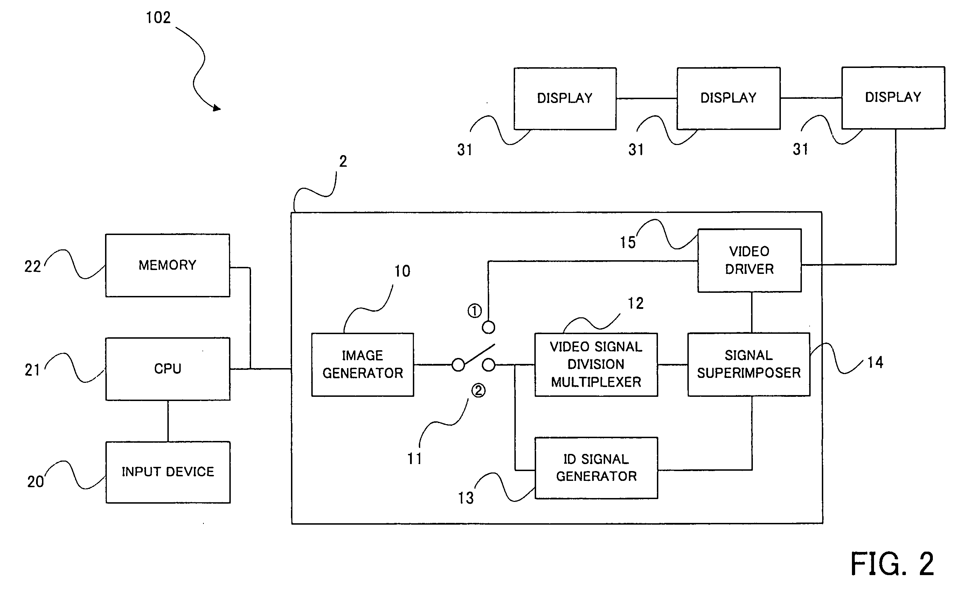

Firstly, the fundamental structure of the drawing apparatus in the first embodiment will be discussed, taking as an example a drawing display system including the drawing apparatus and a plurality of display devices, with reference to FIG. 1 and FIG. 2. FIG. 1 illustrates a fundamental structure of the drawing display system including the drawing apparatus according to the first embodiment, and FIG. 2 illustrates another fundamental structure of the drawing display system including the drawing apparatus according to the first embodiment.

As shown in FIG. 1, the drawing apparatus 1 is provided with: an image generator 10; a switch 11; a video signal division multiplexer 12; an identification (ID) signal generator 13; a signal superimposer 14; and a video driver 15. The drawing display system 101 is provided with: an input device 20; a CPU 21; a memory 22; and a plurality of displays 30, 30, 30 (three in this embodiment) corresponding to the aforementioned display device, in addition to the drawing apparatus 1.

The image generator (video signal generating device) 10 is for generating a predetermined graphic image, under control of the CPU 21 for example. For instance, it is adapted to generate a single graphic image or a plurality of different graphic images (i.e. a plurality of video signals), for example simultaneously, for example by a parallel processing or a pipeline processing.

The switch 11 is for switching the output destination of the video signal generated at the image generator 10, under control of the CPU 21 for example. Namely, it is adapted to output the video signal to the video signal division multiplexer 12 and the identification signal generator 13, or the video driver 15. The operation for this will be discussed later.

The video signal division multiplexer 12 is for dividing a plurality of video signals generated at the image generator 10 by a predetermined unit, and multiplexing the divided video signals on a transmission time axis. Incidentally, it may be multiplexed on a spatial axis or a reproduction time axis, not limited only to the transmission time axis.

The identification signal generator 13 is for generating an identification (ID) signal to identify whether or not a plurality of video signals generated at the image generator 10 is to be displayed on each display, or identify on which display 30, 30, 30 a plurality of video signals is to be displayed.

The signal superimposer 14 is for generating the to-be-outputted video signal by superimposing the video signal divisional multiplexed at the video signal division multiplexer 12 and the identification signal generated at the identification signal generator 13. The signal superimposer 14 may include a mixer for example.

The video driver 15 is for transmitting the video signal to a plurality of displays 30, 30, 30. Particularly in the first embodiment, it is adapted to transmit the video signal with the identification signal superimposed at the signal superimposer 14. The video driver 15 may be adapted to transmit the video driver to one specific display 30, or may be adapted to transmit the video signal to all the displays 30.

Incidentally, the transmission of the video signal from the video driver 15 to each display 30 may be achieved by using a wired transmission medium (e.g. a metal cable such as a coaxial cable, or a fiber optics and so on), or by using a wireless transmission medium (e.g. radio wave, IR and so on).

The aforementioned image generator 10, switch 11, video signal division multiplexer 12, identification signal generator 13, signal superimposer 14 and video driver 15 may be embodied in a hard-wired circuit on an IC chip for example. A single IC chip, LSI circuit or the like is presented as the drawing apparatus 1 by integrating these constitutional elements on the same substrate.

The input device 20 is for inputting a user's operation to the drawing apparatus 1 and presenting a specific example of the external input device according to the present invention. For example, it may include a remote controller, a keyboard, a mouse, a touch panel or buttons. Via the input device 20, for example, the user may input an instruction to generate the video signal to the drawing apparatus 1, or may input instructions for various operations.

The CPU 21 is mainly for controlling the drawing apparatus 1. It is adapted to transmit an instruction, such as which video signal is to be generated at which timing, to the aforementioned image generator 10. The instruction from the CPU 21 may correspond to the user's instruction via the input device 20 for example.

The memory 22 is for presenting a working area for the image generator 10 to generate the vide signal. The memory 22 includes a rewritable semiconductor memory such as a RAM. Incidentally, the memory 22 may be adapted to present a working area for the CPU 21 processing. Additionally, the memory 22 may be included in the drawing apparatus 1.

The display 30 is for receiving the video signal supplied from the video driver 15, analyzing the identification signal superimposed on the received video signal, and displaying a video image indicated by the video signal on the basis of the analysis result. The display 30 may be embodied in various displays, such as a CRT (Cathode Ray Tube), an LCD (Liquid Crystal Display), a PDP (Plasma Display Panel), an organic EL (Electroluminescence) and so on.

Incidentally, the display 30 is adapted to display the video image indicated by the supplied video signal, if the identification signal is not superimposed on the supplied video signal.

Incidentally, a drawing display system 102 as shown in FIG. 2 may be employed. Namely, a display 31 may have an external output terminal to output the inputted video signal to another display 31. In this case, the display 31, which receives a plurality of different video signals transmitted from the video driver 15, judges whether or not the transmitted video signal includes an instruction signal to transmit the video signal to another display 31, and, if yes, transmits the video signal to another display 31 via the external output terminal.

In this arrangement, the video driver 15 is required to transmit the video signal with the identification signal to one display 31, resulting in advantageous alleviation in processing load for the video signal transmission.

### (Exemplary Operation in First Embodiment)

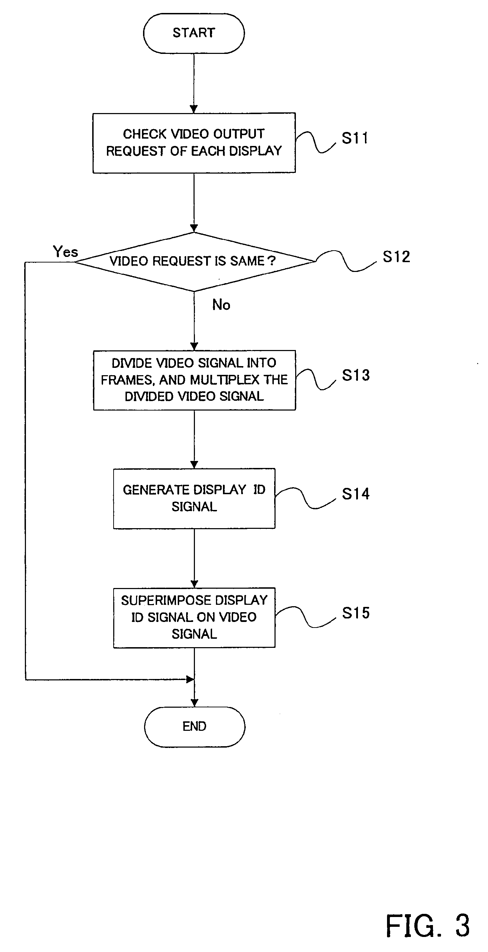

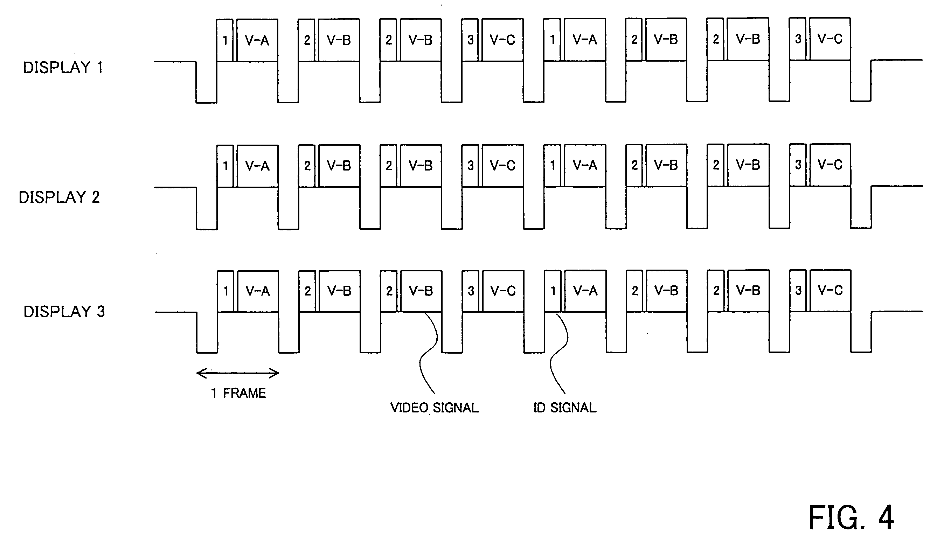

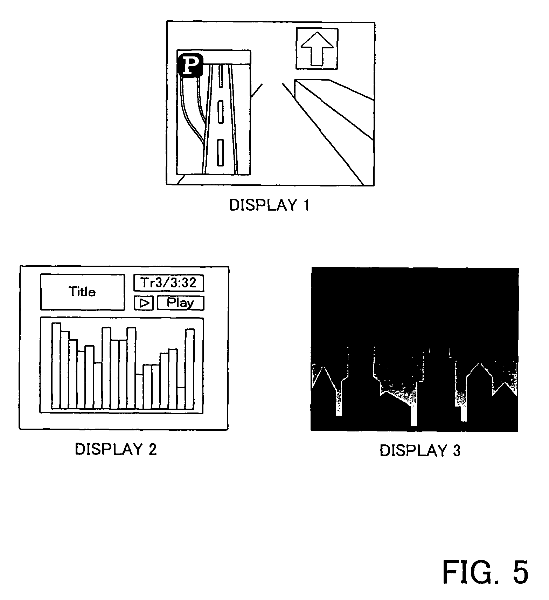

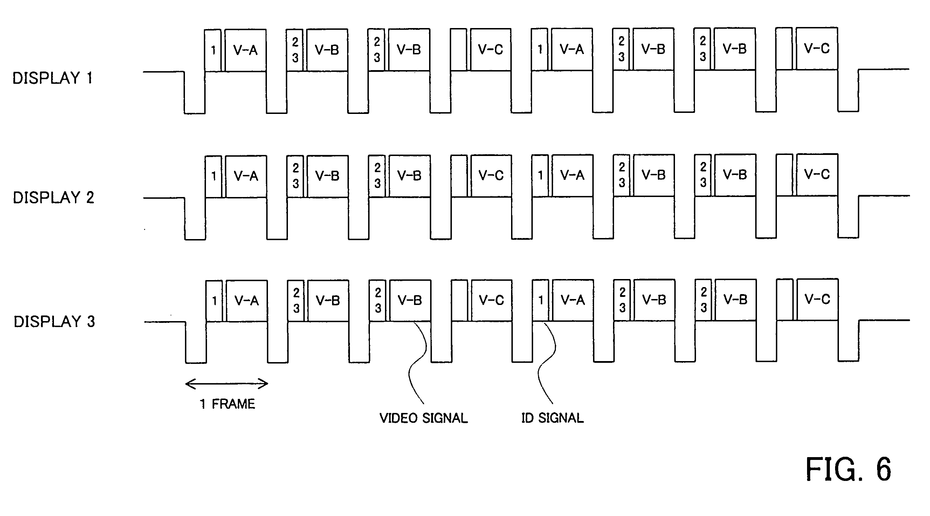

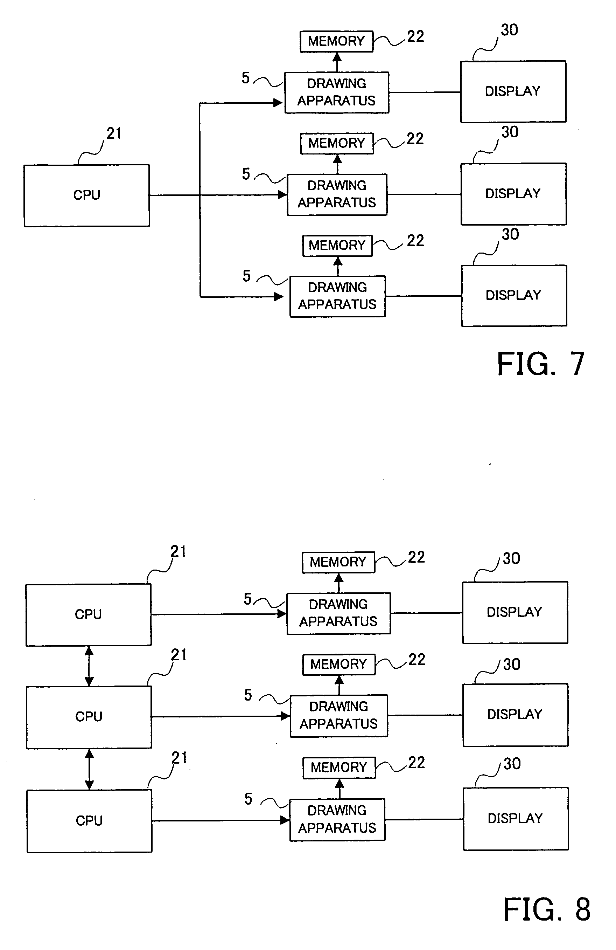

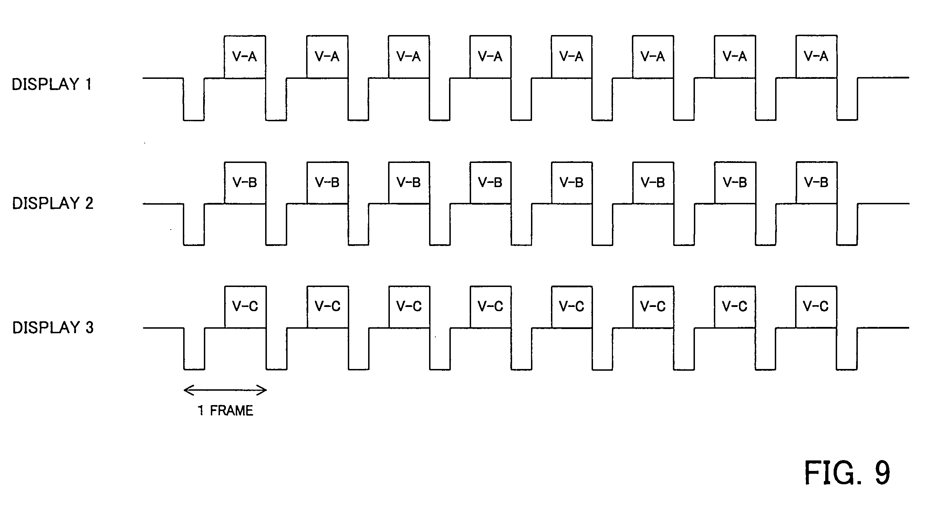

Next, an explanation will be made on an exemplary operation of the drawing apparatus according to the first embodiment, with reference to FIG. 3 to FIG. 9. FIG. 3 shows an operational flow of the drawing apparatus according to the first embodiment. FIG. 4 and FIG. 6 schematically and conceptually illustrate specific examples of the video signal generated by the drawing apparatus according to the first embodiment; FIG. 5 shows video images displayed on displays 30, achieved by the drawing apparatus according to the first embodiment; FIG. 7 schematically shows a conventional drawing display system for a comparison with the drawing display system according to the first embodiment; FIG. 8 schematically shows another conventional drawing display system for a comparison with the drawing display system according to the first embodiment; and FIG. 9 schematically and conceptually illustrates video signals generated by a conventional drawing apparatus, for a comparison with video signals generated by the drawing apparatus according to the first embodiment.

As shown in FIG. 3, the drawing apparatus 1 checks a video output request for each display, under control of the CPU 21 (step S11). For example, it detects the number of displays to which video signals are supplied from the drawing apparatus 1. Incidentally, in the first embodiment, the number of displays "3" is detected.

Then, it judges whether or not video output request for each display 30, 30, 30 means that the same video image is to be displayed on each display 30, 30, 30 (step S12). This judgement is achieved by checking whether or not a user's instruction to display different video image(s) on at least one or each of displays 30 is transmitted via the input device 20. Therefore, if the input device 20 transmits the instruction to display the different video image on at least one of displays 30, video output requests are not judged as for displaying the same video image on each of three displays 30, 30, and 30. This judgement is processed as a part of the CPU 21 processings. In this case, the CPU 21 acts as a judgement device.

As a result of this judgement, if video output requests are judged as for displaying the same video image (step S12: Yes), a single video signal is generated without a plurality of different video signals being generated. In this case, the image generator 10 generates a single video signal for a single video image, with using the working area in the memory 22.

In this case, then, the switch 11 shifts to side "1", under control of the CPU 21. For this, the video signal generated at the image generator 10 is transmitted to the video driver 15. Then, the video signal is transmitted from the video driver 15 to each display 30, 30, 30. Consequently, the same video image is displayed on each display 30, 30, 30.

On the other hand, if video output requests are not judged as for displaying the same video image (step S12: No), the image generator 10 generates a plurality of different video signals. Namely, in the case that the request are not judged as for displaying the same video image, for example, if there is no instruction to display a different video image on a specific display 30 only, the vide signals corresponding to the number of displays 30, i.e. three video signals in the first embodiment, are generated. In this case, then, the switch 11 shifts to side "2", under control of the CPU 21. For this, a plurality of video signals generated at the image generator 10 is transmitted to the video signal division multiplexer 12.

A plurality of video signals generated as such is divided into frame units at the video signal division multiplexer 12, under control of the CPU 21, and then multiplexed on the transmission time axis (step S13).

More specifically, the video signal division multiplexer 12 firstly divides each of different video signals into frame units. This frame unit (i.e. one frame unit) may be 1/60 seconds, that is a field frequency in a NTSC scheme as an example of the display scheme of the display 30 or may be 1/30 seconds, that is a frame frequency in said NTSC scheme. Alternatively, it may be 1/50 seconds, that is a field frequency in a PAL scheme, or may be 1/25 seconds, that is a frame frequency in said PAL scheme. Alternatively, if a high quality video image is required depending on the video contents, it may be shorter frequency, such as 1/80 seconds, 1/100 seconds. Alternatively, if the high quality video image is not required, it may be longer frequency, such as 1/20 seconds.

Then, a plurality of different video signals divided into frame units as such is multiplexed as a single output video signal, on the transmission time axis, due to the operation of the video signal division multiplexer 12. In this case, for example, a predetermined frame is selectively extracted (i.e. other frames are thinned out), and then multiplexed.

Incidentally, in the case of selectively extracting the predetermined frame, the video quality or the like of the video image generated by the image generator 10 is preferably considered. Namely, in the case that video signals for a motion picture for example and video signals for a still picture for example are generated, video signals for the motion picture for example is extracted with first priority. For example, in the case that each video signal is divided into 30 frames per second, 20 video signal frames for the motion picture is extracted and 10 video signal frames for the still picture is extracted. Then, extracted frames of both kinds are multiplexed to generate a single output video signal made of 30 frames per second. By extracting with first priority a video image involving a great number of divided video signals to be multiplexed (e.g. high quality or high resolution video image) and extracting with lower priority other video images (e.g. low quality or low resolution video image), the total quality of different video images displayed on a plurality of display devices is prevented from being deteriorated.

Alternatively, the video signal may be multiplexed after being upconverted. Upconverting the video signal is achieved by increasing the number of divisional frames for example. For example, if two video signals are generated under a condition that one video signal is generated and transmitted by 60 frame units per second, one video signal is upconverted to a time period corresponding to 120 frames per second and then multiplexed. Thereby, the video signal can be divided and multiplexed without changing the number of frames for one video signal in the output video signal (in this case, the output video signal made of 60 frames per second). Therefore, a practical great advantage can be obtained, allowing dividing and multiplexing a plurality of video signals without deteriorating quality of each video image.

Alternatively, upconverting the video signal may be achieved by improving the resolution of the video image for example. Namely, it is advantageously possible to minimize an influence on the image quality, even if some frames are thinned out, in the case that a high-resolution video image is generated in advance at the image generator 10.

Incidentally, even if the video signal is not upconverted, the video signal may be downconverted to be divided and multiplexed. Namely, the number of frames for one video signal in the output video signal may be decreased through operations between frames and the like, and a plurality of video signals may be divided and multiplexed. Thereby, it is possible to obtain a considerable advantage of the drawing apparatus according to the first embodiment, without thinning out frames, even though the image quality of video images displayed on each display 30, 30, and 30 decreases.

Alternatively, a plurality of video signals may be divided and multiplexed without thinning out frames, by generating the low resolution video image (i.e. small data amount for the video image) in advance at the image generator 10.

Then, the multiplexed video signals are transmitted to the signal superimposer 14 from the video image division multiplexer 12.

Simultaneously or after dividing and multiplexing the video signals, the identification signal to identify the video signals to be displayed on each display 30 from among the multiplexed video signals is generated, through the operation of the identification signal generator 13, under control of the CPU 21 (step S14). In this case, the identification signal generator 13 receives a result of the division multiplexing of the video signals from the video signal division multiplexer 12, and generates the identification signal on the basis of the received result. Namely, the identification signal to identify the display 30 for displaying predetermined frame units or time units of the video signals from among divided and multiplexed video signals is generated.

The identification signal is generated so that each display can be identified as shown in FIG. 4 (discussed later), if each display 30 can be identified by using three identification numbers, "1", "2" and "3". Namely, the identification number corresponds to a specific embodiment of the identifier of the present invention. Then, the generated identification signals are transmitted to the signal superimposer 14.

Then, at the signal superimposer 14, the video signals multiplexed on the transmission time axis, and the identification signals to identify the existence of frames to be reproduced on the transmission time axis, are superimposed (step S15). Thereby, the video signals shown in FIG. 4 are generated, and transmitted to each display 30, 30, and 30 by the video driver 15.

Incidentally, transmitting the video signals from the video driver 15 to each display 30, 30, 30 may be achieved by frame units, or may be achieved after being divided into packet units of predetermined size. By any unit, the transmission can be achieved by means of wired or wireless transmission medium as mentioned above. Furthermore, no matter how the video signal is analog signal or digital signal as mentioned below, the transmission can be achieved appropriately. Now an explanation will be made on the video signal transmitted from the vide driver 15.

As shown in FIG. 4, in the video signal, which is obtained at the signal superimposer 14 by superimposing the identification signal on the divided and multiplexed video signal, the identification signal allowing identifying the video signal is superimposed (i.e. added) frame unit by frame unit. For example, as for a frame including a video image A to be displayed on one display 30, the identification signal to identify said one display 30 is superimposed at the head of the frame (i.e. a back porch). Alternatively, as for a frame including a video image B or C to be displayed on another display 30, the identification signal to identify said another display 30 is superimposed at the head of the frame. Incidentally, the identification signal may be superimposed at the end of the frame (i.e. a front porch), or may be superimposed between frames (i.e. a retrace blanking period). Furthermore, it may be superimposed inside of the video signal. In any arrangement, the divided and multiplexed video signal can be displayed appropriately by referring to the identification signal.

Incidentally, the video signal generated as such may be an analog video signal, or may be a digital video signal.

At each display 30 to which the video signal is supplied shown in FIG. 4, the identification signal is referred frame unit by frame unit. If the supplied video signal is judged as a signal to be displayed, the display 30 outputs (displays) the video signal in that frame. On the other hand, the supplied video signal is judged as a signal not to be displayed, the display 30 does not output (display) the video signal in that frame, and thus maintains a present display status of the display 30. That is, the display 30 is ready to receive the video signal for the next frame, while the video signal presently displayed on the display 30 is maintained, or nothing is displayed if nothing is presently displayed.

Then, predetermined different video images are displayed on each display 30, 30, 30, as shown in FIG. 5. For this, it is possible to display video images reflecting the user's preference on each display 30, 30, 30.

For example, if the drawing apparatus 1 is used in an on-vehicle rear entertainment system, the driver who sits in the front seat can view a video image for a route guidance in the navigation system, while the passengers in the rear seat can view an equalizer display of music presently played. Furthermore, the passengers in the third seat can view any background video image.

Furthermore, the identification signal as shown in FIG. 6 may be superimposed. Namely, the video signals may be outputted so that the video image A is displayed on one display 30, the video image B is displayed on other two displays 30, and the video image C is not displayed on any display 30. If such video signals can be transmitted, the video image to be displayed on each display 30 can be changed by changing the identification signal, without changing the video signal. Therefore, the working load of the image generator 10 in order to generate the video signals can be advantageously alleviated. Rewriting the identification signals may be performed by the identification signal generator 13, under control of the CPU 21.

A construction of a conventional drawing display system in order to display different video images on a plurality of displays will be explained, with reference to FIG. 7 to FIG. 9, for a comparison with the drawing apparatus 1 according to the first embodiment.

As shown in FIG. 7, the conventional drawing display system needs to provide the drawing apparatuses 5 for each display 30, in order to display different video images respectively on a plurality of displays 30. For this, the circuit area, the parts count and the signal transmission path length are increased due to the increased circuit elements or the like, in comparison with the drawing display system involving a single drawing apparatus according to the first embodiment of the present invention, resulting in a considerable increase in the product cost, as well as a considerable increase in the product weight. Furthermore, the software to control a plurality of drawing apparatuses 5 so as to co-operate with each other is disadvantageously complicated.

Another conventional drawing display system shown in FIG. 8 has also the same problem. Namely, even if there are provided a plurality of CPUs to control each drawing apparatus, the aforementioned problem is arisen.

In conventional drawing display systems shown in FIG. 7 and FIG. 8, a plurality of video signals shown in FIG. 9 is generated at each drawing apparatus. Namely, the individual drawing apparatus generates the individual video signal for each display 30, and the individual video signal is transmitted to the display 30 where the individual video signal is to be displayed. For example, the video image A is transmitted to one display 30, the video image B is transmitted to another display 30, and the video image C is transmitted to still another display 30.

Furthermore, for example, in the case that the same video image is to be displayed on each display 30, each drawing apparatus 5 independently (or cooperatively under control of the CPU 21) generates three the same video signal, respectively, and then transmit to each display 30.

For this, when the video signal is generated and transmitted to each display 30, a tedious operation for the drawing apparatus is observed. Thereby, it cannot be said that the video signal is generated effectively.

According to the drawing apparatus of the first embodiment, however, it is possible to display different video images on a plurality of displays 30 also by a single drawing apparatus. Therefore, the drawing apparatus can be presented having an extremely remarkable advantage to solve various problems as seen in the aforementioned conventional systems.

Consequently, according to the first embodiment of the drawing apparatus of the present invention, it is possible to display different video images on a plurality of displays, even by a single drawing apparatus embodied in a single IC chip or the like for example, due to dividing and multiplexing the video signal and superimposing the identification signal thereon. For this, the circuit area, the parts count, the signal transmission path length and so on can be decreased, resulting in the low product cost and the light weight product. Additionally, comparing to the construction involving a plurality of drawing apparatuses, it has advantages in that the processings become simpler, and the power consumption is reduced. Therefore, the drawing apparatus allowing an extremely low cost and an efficient operation, and furthermore paying attention to the earth environment from a viewpoint of energy efficiency is presented, while different video images are displayed on a plurality of display devices.

### (Modification of First Embodiment)

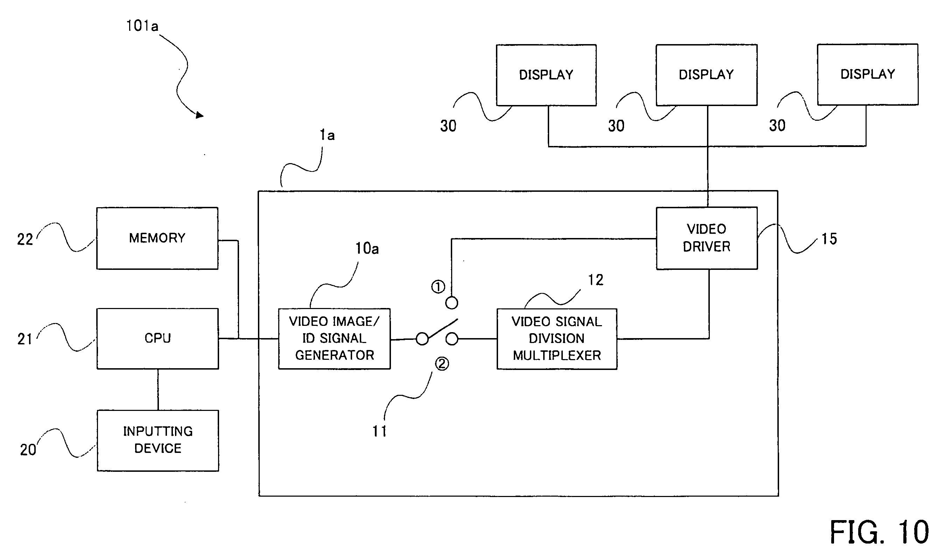

Next, with reference to FIG. 10, an explanation will be made on a modification of the drawing apparatus according to the first embodiment of the present invention. FIG. 10 illustrates a fundamental construction of the drawing apparatus in this modification. As shown in FIG. 10, the drawing apparatus 1a in this modification is provided with: video image/identification signal generator 10a; the switch 11; the video signal division multiplexer 12; and the video driver 15. A drawing display system 101a is provided with: in addition to the drawing apparatus 1a, the input device 20; the CPU 21; the memory 22 and a plurality (three in this modification) of displays 30, 30, 30 corresponding to the aforementioned display device.

Particularly, the drawing apparatus 1a in this modification has the video image/identification signal generator 10a, for generating the video signal on which the identification signal as explained with reference to FIG. 4 and FIG. 6 is superimposed. Therefore, there is no need to superimpose the separately generated identification signal on the video signal, and thereby a time period necessary from generating the video signal to outputting it to the display can be shortened. Namely, it is possible to display the video image with shorter time period, for example, from inputting an instruction to display the video image via the CPU 21.

However, in the case that the video image is complicated, or a higher level image processing is required, the construction as shown in FIG. 1 and FIG. 2 for generating separately the video signal and the identification signal is preferable in a viewpoint of processing performance for generating the video image.

This modification can also take constructions corresponding to various constructions of the drawing display system 101 according to the first embodiment. For example, as shown in FIG. 2, the video signal may be outputted from the video driver 15 to one display 30, and the display 30 may output the video signal to other displays 30.

### (Second Embodiment)

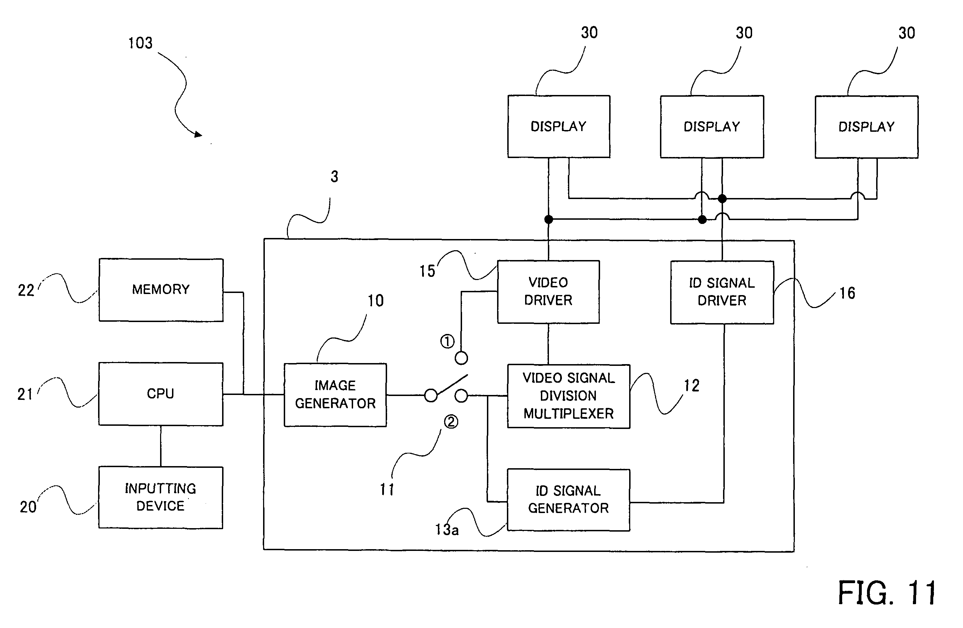

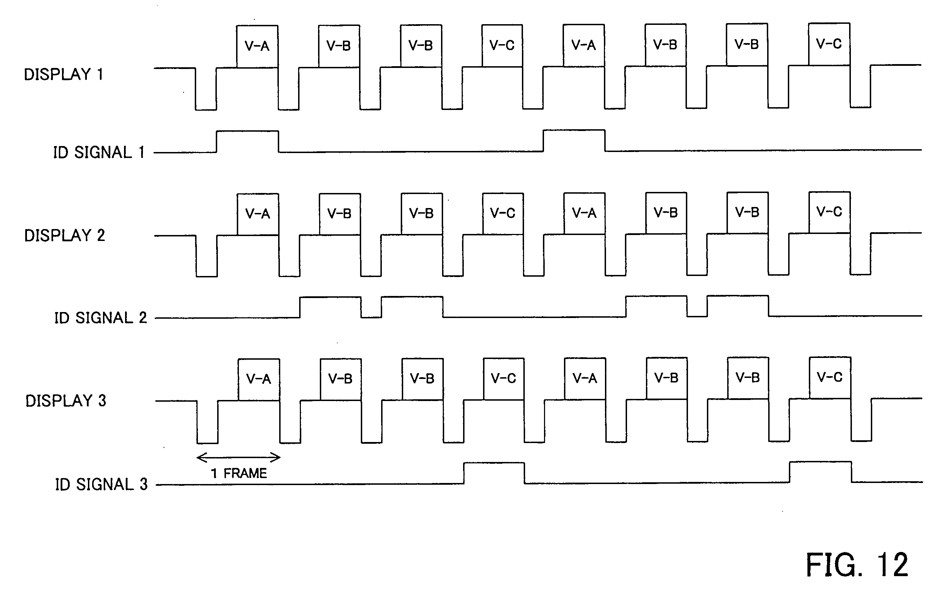

Next, an explanation will be made on the second embodiment of the drawing apparatus according to the present invention, with reference to FIG. 11 and FIG. 12. Incidentally, in the drawing apparatus according to the second embodiment, elements the same as the first embodiment carry the same numerals or step numbers, and the explanation thereof is omitted.

### (Fundamental Construction of Second Embodiment)

Firstly, with reference to FIG. 11, an explanation will be made on a fundamental construction of the drawing apparatus according to the second embodiment, taking as an example the drawing display system employing the drawing apparatus. FIG. 11 illustrates a fundamental construction of the drawing display system employing the drawing apparatus according to the second embodiment.

As shown in FIG. 11, the drawing apparatus 3 is provided with: the image generator 10; the switch 11; the video signal division multiplexer 12; the identification signal generator 13a; the video driver 15 as a signal transmittance device; and an identification (ID) signal driver 16. The system is provided with: in addition to the drawing apparatus 3, the input device 20; the CPU 21; the memory 22; and the display 30 as the display device.

The identification signal generator 13a is for generating the identification signal to identify or judge whether or not a plurality of video signals generated by the image generator 10 is to be displayed on each display 30, or which display 30 is to be used to display the video signal.

Particularly in the second embodiment, the identification signal generator 13a is adapted to generate the identification signal including a trigger signal. Incidentally, the identification signal including the trigger signal will be discussed later.

Furthermore, in the second embodiment, there is provided the identification signal driver 16. The identification signal driver 16 is for transmitting the identification signal to each display 30. The identification signal driver 16 may be adapted to transmit the identification signal to a specific display 30 selected from among a plurality of displays 30, or may be adapted to transmit the identification signal to all the displays 30.

Incidentally, transmitting the identification signal from the identification signal driver 16 to each display 30 may be achieved by means of a wired transmission medium (e.g. metal cable such as coaxial cable, or fiber optic and so on), or may be achieved by means of a wireless transmission medium (e.g. radio wave, IR and so on). Incidentally, the transmission medium may be used commonly as another transmission medium to transmit the video signal from the video driver 15 to each display 30.

The aforementioned image generator 10, switch 11, video signal division multiplexer 12, identification signal generator 13a, video driver 15 and identification signal driver 16 may be embodied in a hard-wired circuit on an IC chip, for example. A single IC chip, LSI circuit and so on as the drawing apparatus 3 is presented by integrating and implementing these elements on the same substrate.

### (Exemplary Operation of Second Embodiment)

Next, with reference to FIG. 12, an explanation will be made on an exemplary operation of the drawing apparatus according to the second embodiment. FIG. 12 illustrates schematically and conceptually the video signal generated by the drawing apparatus according to the second embodiment.

The operation of the drawing apparatus according to the second embodiment is the same as that of the drawing apparatus according to the first embodiment. That is, due to the operation shown in the flow chart of FIG. 3, a plurality of different video signals is generated, and divided and 'multiplexed and then transmitted with the identification signal to each display.

That is, the video output of each display is checked (step S11, see FIG. 3), and it is judged whether or not the video request of each display is for displaying the same video image on three displays 30, 30, 30 (step S12, see FIG. 3).

As a result of this judgement, if the video request is judged as for displaying the same video image (step S12: Yes), the single video signal generated at the image generator 10 is transmitted to each display 30, 30, 30 where the same video image is displayed.

On the other hand, if the video request is not judged as for displaying the same video image (step S12: No), a plurality of different video signals is divided and multiplexed at the video signal division multiplexer 12, and transmitted to the video driver 15 (step S13, see FIG. 3). Incidentally, dividing/multiplexing the video signal may take various aspects corresponding to the first embodiment.

On the other hand, particularly in the second embodiment, the identification signal including the trigger signal is generated at the identification signal generator 13a (step S14, see FIG. 3). That is, the trigger signal is generated to indicate whether or not the video signal divided and multiplexed at the video signal division multiplexer 12 is to be displayed frame by frame. For example, when a video signal in a certain frame is to be displayed, the trigger signal indicating ON state is generated. On the other hand, when a video signal in a certain frame is not to be displayed, the trigger signal indicating OFF state is generated. This identification signal is preferably generated for each display 30. That is, if there are three displays 30, 30, 30, three identification signals each including trigger signal to indicate the display timing of the video signal for each display 30.

Thus, the video signal and the identification signal shown in FIG. 12 are generated. As shown in FIG. 12, the video signal and the identification signal to be transmitted to one display 30 is illustrated in the upper column in FIG. 12, the video signal and the identification signal to be transmitted to another display 30 is illustrated in the middle column in FIG. 12, and the video signal and the identification signal to be transmitted to still another display 30 are illustrated in the lower column in FIG. 12.

In this case, if each identification signal is in high level (i.e. ON state), each display 30 outputs (displays) the video signal associated with the identification signal on the time axis. Incidentally, the identification signal is generated including the trigger to indicating the continuation of outputting (displaying) the video signal for a predetermined time period (e.g. 1/2 frame, 1 frame, 2 frames and so on) from the transition to the ON state. Incidentally, if the identification signal is in low level, it may be recognized as ON state by each display 30.

The identification signal generated as such is transmitted to the identification signal driver 16. Incidentally, the identification signal may be either an analog video signal or digital video signal.

Then, the video driver 15 and the identification signal driver 16 synchronously transmit the video signal or the identification signal, respectively, to each display 30, 30, 30. Incidentally, transmitting the video signal from the identification driver 16 to each display 30, 30, 30 may be performed frame by frame, or packet by packet. In any type of transmission, it may be achieved by means of a wired or wireless transmission. Furthermore, no matter how the identification signal is an analog signal or digital signal, it may be performed appropriately.

Then, each display 30 to which the video signal and the identification signal shown in FIG. 12 are supplied refers to the identification signal frame by frame. If the trigger signal is in the "ON-state", the video signal in that frame is displayed (outputted). On the other hand, if the trigger signal is in the "OFF-state", the video signal in that frame is not displayed (outputted), and the present state of the display 30 is maintained. That is, each display is ready for receiving the video signal in the next frame, while the video signal presently displayed on the display 30 is maintained, or nothing is displayed if nothing is presently displayed.

Then, predetermined different video images are displayed on each display 30, as shown in FIG. 5. For this, the user of each display can view a desired video image.

Incidentally, particularly in the second embodiment, the identification signal can be transmitted as an independent signal separately from the video signal to each display 30. For this, it is possible to advantageously prevent the identification signal content from being wrongly recognized as the video signal at each display 30, which may be caused by the transmission error of the video signal (e.g. synchronization error due to a wrong transmission timing, bit reading error due to noise or the like in the path).

Incidentally, in the second embodiment, since the video signal is transmitted to each display without being superimposed by the identification signal, step S15 in FIG. 3 is not performed.

Consequently, according to the second embodiment of the drawing apparatus of the invention, even if only one drawing apparatus is used, which may be embodied in a single IC chip or the like, different video images can be displayed respectively on a plurality of displays, by dividing and multiplexing the video signal, and adding the identification signal thereto. For this, the circuit area, parts count and signal path length can be reduced, and thereby the product cost and the product weight can be reduced. Additionally, comparing to the construction with a plurality of drawing apparatuses, there are advantages in that the processing is simplified, and the power consumption is reduced. Therefore, the drawing apparatus allowing an extremely low cost and an efficient operation, and furthermore paying attention to the earth environment from a viewpoint of energy efficiency is presented, while different video images are displayed on a plurality of display devices.

Incidentally, in the second embodiment, the video signal type and transmission unit, and the transmission medium construction may take various constructions in the first embodiment.

### (Third Embodiment)

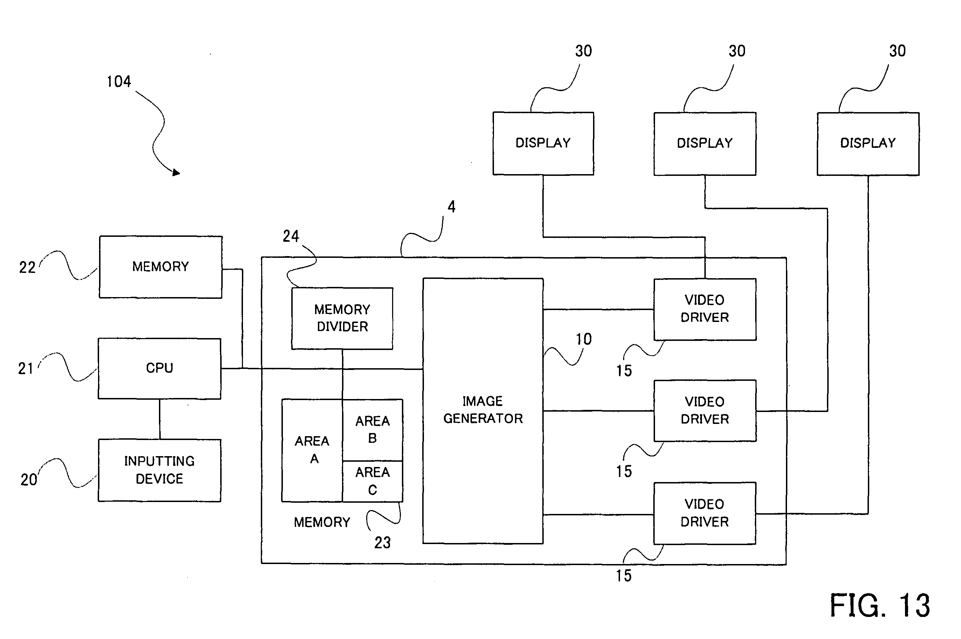

Next, with reference to FIG. 13 to FIG. 15, an explanation will be made on the third embodiment of the drawing apparatus of the invention. Incidentally, in the drawing apparatus according to the third embodiment, elements the same as those of the first and second embodiments carry reference or step numerals the same as those of the first and second embodiments, and the explanation about them is omitted.

### (Fundamental Construction of Third Embodiment)

Firstly, with reference to FIG. 13, an explanation will be made on the fundamental structure of the drawing apparatus according to the third embodiment, taking as an example a drawing display system using the drawing apparatus. FIG. 13 illustrates the fundamental construction of the drawing display system using the drawing apparatus according to the third embodiment.

As shown in FIG. 13, the drawing apparatus 4 is provided with: the image generator 10; the video driver 15; a memory 23 as a record area device; and a memory divider 24 as a working area dividing device. The drawing display system 104 is provided with: in addition to the drawing apparatus 4, the input device 20; the CPU 21; the memory 22; and a plurality of displays 30 as the display device.

The memory 23 is for providing a working area for the image generator 10 to generate the video image. The memory 23 includes a rewritable memory such as RAM. Incidentally, the memory 23 may provide a working area for the CPU 21 operation. That is, either memory 22 or memory 23 may be disposed, without both being disposed.

Particularly in the third embodiment, the memory 23 is for dividing the record area, depending on the contents of the video image to be generated by the image generator 10. Dividing the memory 23 is performed by the operation of the memory divider 24.

The memory divider 24 is for dividing the memory 23 into a plurality of record areas as record area portions. In this case, the memory 23 can be divided into a number of record areas corresponding to a number of video images to be generated at the image generator 10. However, the divided record areas may be more than the number of video images to be generated at the image generator 10, or may be less than the number of these video images.

The aforementioned image generator 10, video driver 15, memory 23 and memory divider 24 are embodied in a hard-wired circuit on an IC chip for example. A single IC chip, LSI circuit and the like are presented as the drawing apparatus 4, by integrating these elements on the same substrate.

### (Exemplary Operation of Third Embodiment)

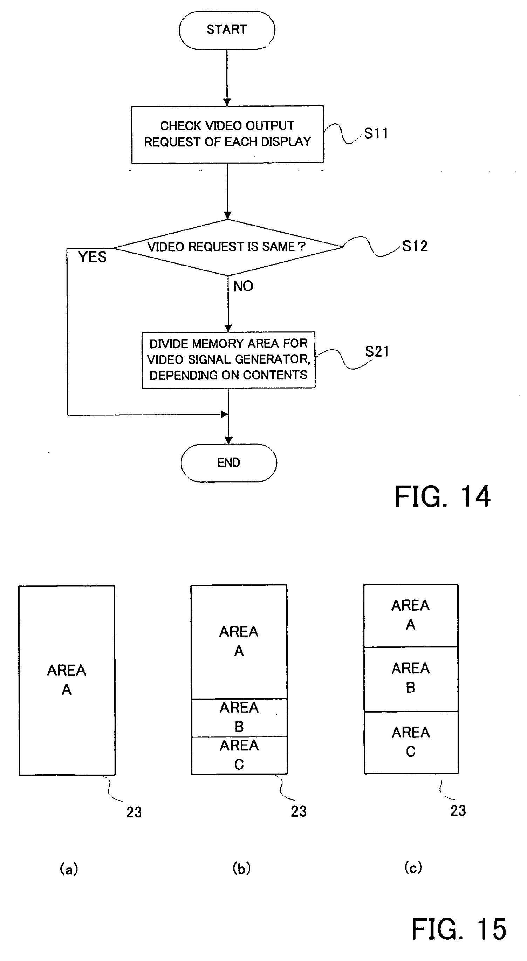

Next, with reference to FIG. 14 and FIG. 15, an explanation will be made on an exemplary operation of the drawing apparatus according to the third embodiment. FIG. 14 illustrates an exemplary operational flow of the drawing apparatus according to the third embodiment. FIG. 5 schematically and conceptually illustrates a specific example in dividing the working area in the memory used by the image generator in the drawing apparatus according to the third embodiment.

As shown in FIG. 14, the video output of each display is checked (step S11), and it is judged whether or not the video image request of each display is for displaying the same video image (step S12).

As a result of this judgement, if it is judged that the video image request is for displaying the same video image (step S12: Yes), a single video signal generated at the image generator 10 is transmitted to each display 30, where the video image is displayed.

On the other hand, if it is judge that the video image request is not for displaying the same video image (step S12: No), the memory divider 24 divides the working area of the memory 23, depending on the contents of a plurality of video signals generated by the image generator 10, under control of the CPU 21 (step S21). An embodiment of dividing the memory 23 into a plurality of record areas will be explained with reference to FIG. 15.

As shown in FIG. 15, in dividing the memory 23 into record areas by the memory divider 24, larger record area is preferable to be assigned, as the quality of the video image generated at the image generator 10 is higher. That is, for example, in the case that the image generator 10 generates a single video signal, the memory 23 is not divided and the whole record area is used for this single video signal.

On the other hand, for example, in the case that the image generator 10 generates three different video signals (e.g. video signals A, B and C), and the quality of the video image according to the video signal A is higher than that of the video images according to the video signal B or C, the memory 23 is divided into three areas, as shown in FIG. 15 (b). In this case, for the video signal A to indicate the higher quality video image, a larger record area, the area A, is assigned. Then, for the video signals B and C, smaller areas than the area A are assigned respectively.

On the other hand, for example, in the case that the image generator 10 generates three different video signals (e.g. video signals A, B and C), and the quality of the video images according to each signal A, B and C are at the same level, the memory 23 is divided into three areas, as shown in FIG. 15 (c). In this case, each of the divided three areas has a size equal to each other.

By using the divided memory 23 (i.e. the divided record area) as mentioned above, the image generator 10 generates each video signal on each record area.

A plurality of video signals generated as such is transmitted to each video driver 15 connected to each display 30 where the video signal is to be supplied respectively, and further transmitted from each video driver 15 to each display 30.

Then, at each display 30 where the video signal is supplied, the transmitted video signal is displayed (outputted). Then, predetermined different video images are displayed on each display 30, as shown in FIG. 6. For this, the user of each display can view the desired video image.

Consequently, according to the third embodiment of the drawing apparatus of the invention, even if only one drawing apparatus, which may be embodied in a single IC chip or the like, different video images can be displayed on a plurality of displays, by dividing the memory depending on the contents of the video image according to the video signal in generating a plurality of video signals. For this, the circuit area, parts count and signal path length can be reduced, and thereby the product cost and the product weight can be reduced. Additionally, comparing to the construction with a plurality of drawing apparatuses, there are advantages in that the processing is facilitated, and the power consumption is reduced. Therefore, the drawing apparatus allowing an extremely low cost and an efficient operation, and furthermore paying attention to the earth environment from a viewpoint of energy efficiency is presented, while different video images are displayed on a plurality of display devices.

Incidentally, in the third embodiment, various video signal types and identification signal types, and transmission units, and further transmission medium constructions may take various constructions in the first and second embodiments.

Additionally, a plurality of video signals treated or handled in the fist, second and third embodiments is not limited to signals generated at the image generator 10. For example, the operations in the aforementioned embodiments may be performed using the video image data buffered in the record medium such as RAM 21. In this case, the buffered video image data may be a video image data that is recorded in advance when the drawing apparatus is fabricated for example. Alternatively, the video signal generated by the image generator 10 may be buffered temporarily at least. Preferably, the video image data recorded in the RAM 21 may be read by the image generator 10 for example, under control of the CPU 21, and transmitted from the video driver 15 to each display 30.

In this case, in each of the first and second embodiments, the signal superimposer 14 preferably superimposes the identification signal on the video signal with an appropriate assignment.

## Claims

1. A drawing apparatus (1,1a,2,3,4) for displaying video images on a plurality of display devices (30,31) respectively, **characterized in that** the drawing apparatus comprises:
a video signal generating device (10,10a) for generating a plurality of different video signals which is associated with the plurality of display devices respectively; and
a signal transmitting device (15,16) for transmitting the plurality of different video signals to the associated plurality of display devices respectively.

2. The drawing apparatus (1,1a,2,3,4) according to claim 1, **characterized in that** the drawing apparatus further comprises:
a division multiplexing device (12,) for dividing each of the plurality of different video signals generated by the video signal generating device (10,10a) into predetermined units, and generating a single multiplexed signal by multiplexing the divided video signals, and
the signal transmitting device (15) transmits the multiplexed signal to the associated plurality of display devices (30,31).

3. The drawing apparatus (1,1a,2,3,4) according to claim 2, **characterized in that** each of the predetermined units is a unit of a frame period of the video signals.

4. The drawing apparatus (1,1a,2,3,4) according to claim 2, **characterized in that** the division multiplexing device (12) extracts at least a part of the divided video signals and multiplexes the extracted signals.

5. The drawing apparatus (1,1a,2,3,4) according to claim 4, **characterized in that** the division multiplexing device (12) extracts at least the part of the divided video signals, after upconverting the video signals.

6. The drawing apparatus (1,1a,2,3,4) according to claim 4, **characterized in that** the division multiplexing device (12) extracts a video signal representing a high quality video image among the divided video signals, in preference to a video signal representing a low quality video image among the divided video signals.

7. The drawing apparatus (1,1a,2,3) according to claim 2, **characterized in that** the drawing apparatus further comprises:
an identification signal generating device (10a,13,13a) for generating an identification signal to identify the plurality of display devices (30,31) respectively, and
the signal transmitting device (15, 16) associates the multiplexed signal with the generated identification signal, and transmits the associated signals to the plurality of display devices.

8. The drawing apparatus (3) according to claim 7, **characterized in that** the identification signal includes an identifier to identify each of the plurality of display devices (30,31).

9. The drawing apparatus (1,1a,2,3) according to claim 7, **characterized in that** the identification signal is a signal superimposed on the divided video signal.

10. The drawing apparatus (1,1a,2,3) according to claim 7, **characterized in that**
the identification signal includes a trigger signal to indicate a display timing when one of the plurality of different video signals is to be displayed on the display device (30,31) associated with said one of the plurality of different video signals,
the identification signal generating device (13,13a) generates a plurality of identification signals corresponding to the plurality of display devices respectively, and
the signal transmitting device (15,16) transmits the plurality of identification signals to the plurality of display devices respectively.

11. The drawing apparatus (1,1a,2,3) according to claim 10, **characterized in that** the trigger signal indicates the display timing for said each predetermined unit.

12. The drawing apparatus (4) according to claim 1, **characterized in that** further comprises:
a record area device (23) for providing a working area for the video image generating device (10) to generate the plurality of video signals; and
a working area dividing device (24) for dividing the working area into a plurality of record area portions corresponding to the plurality of display devices (30,31) to generate the plurality of different video signals,
the signal transmitting device (15) transmits the different video signals generated in the record area portions to the plurality of display devices.

13. The drawing apparatus (4) according to claim 12, **characterized in that** the working area dividing device (24) divides the working area into the plurality of record area portions having different sizes, depending on quality of each of the plurality of different video signals.

14. The drawing apparatus (4) according to claim 12, **characterized in that** the working area dividing device (24) divides the working area so that if one of the plurality of video signals is of higher quality than another video signal, the record area portion to generate said one video signal occupies a larger area than another record area portion to generate said another video signal.

15. The drawing apparatus (1,1a,2,3,4) according to claim 1, **characterized in that** the drawing apparatus further comprises:
a judging device (S12) for judging whether or not the same video image is to be displayed on each of the plurality of display devices (30,31),
the signal generating device (10,10a) generates the same video signal, if the judging device judges that the same video image is to be displayed, and
the signal transmitting device (15) transmits the same video signal to each of the plurality of display devices.

16. The drawing apparatus (1,1a,2,3,4) according to claim 1, **characterized in that** the drawing apparatus further comprises an external inputting device (20) for externally inputting an instruction to generate the plurality of video signals.

17. A drawing method of displaying video images on a plurality of display devices (30,31) respectively, **characterized in that** the drawing method comprises:
a video signal generating process of generating a plurality of different video signals which is associated with the plurality of display devices respectively; and
a signal transmitting process of transmitting the plurality of different video signals to the associated plurality of display devices respectively.

18. The drawing method according to claim 17, **characterized in that** the drawing method further comprises:
a division multiplexing process of dividing each of the plurality of different video signals generated at the video signal generating process into predetermined units, and generating a single multiplexed signal by multiplexing the divided video signals, and
the signal transmitting process includes a process of transmitting the multiplexed signal to the associated plurality of display devices (30,31).

19. The drawing method according to claim 18, **characterized in that** further comprises:
an identification signal generating process of generating an identification signal to identify the plurality of display devices (30,31) respectively, and
the signal transmitting process includes a process of associating the multiplexed signal with the generated identification signal, and a process of transmitting the associated signals to the plurality of display devices.

20. The drawing method according to claim 17, **characterized in that** the drawing method further comprises:
a working area providing process of providing a working area to generate the plurality of different video signals; and
a working area dividing process of dividing the working area into a plurality of record area portions corresponding to the plurality of display devices (30,31) to generate the plurality of different video signals, and
the signal transmitting process includes a process of transmitting the different video signals generated in the record area portions to the plurality of display devices.

21. A computer program product in a computer-readable medium for tangibly embodying a program of instructions executable by a computer to make the computer function as at least a part of a video image generating device (10,10a) and a signal transmitting device (15,16) in a drawing apparatus (1,1a,2,3,4) for displaying video images on a plurality of display devices (30,31) respectively, **characterized in that** the drawing apparatus comprises: the video signal generating device for generating a plurality of different video signals which is associated with the plurality of display devices respectively; and the signal transmitting device for transmitting the plurality of different video signals to the associated plurality of display devices respectively.

22. A drawing display system (101,101a,102,103,104) comprising:
a plurality of display devices (30,31) to display video images; and
a drawing apparatus (1,1a,2,3,4) having a video image generating device (10,10a) for generating a plurality of different video signals which is associated with the plurality of display devices respectively, and a signal transmitting device (15,16) for transmitting the plurality of different video signals to the associated plurality of display devices respectively.
